# EUROPEAN PATENT SPECIFICATION

(11) **EP 3 483 131 B1**
(45) Date of publication and mention of the grant of the patent: **23.12.2020**
(21) Application number: 17306552.5
(22) Date of filing: 09.11.2017
(51) Int. Cl.: C04B 28/02, C04B 28/04, C04B 38/02

(54) **METHOD OF PRODUCTION OF A MINERAL FOAM OBTAINED FROM A FOAMING SLURRY OF HIGH YIELD STRESS**
VERFAHREN ZUR HERSTELLUNG EINES MINERALSCHAUMSTOFFS AUS EINEM SCHÄUMENDEN SCHLAMM MIT HOHER STRECKGRENZE
PROCÉDÉ DE PRODUCTION D'UNE MOUSSE MINÉRALE OBTENUE À PARTIR D'UNE BOUE DE MOUSSAGE D'UNE LIMITE APPARENTE D'ÉLASTICITÉ ÉLEVÉE

(43) Date of publication of application: 15.05.2019
(73) Proprietor: Holcim Technology Ltd, 6300 Zug (CH)
(72) Inventor: JEZEQUEL, Pierre-Henri, 38070 SAINT QUENTIN FALLAVIER (FR); DALAS, Florent, 38070 SAINT QUENTIN FALLAVIER (FR); LE-CHIEN, Hoang, 38070 SAINT QUENTIN FALLAVIER (FR); REBOUSSIN, Sandrine, 38070 SAINT QUENTIN FALLAVIER (FR); CHERVIER, Stéphane, 38070 SAINT QUENTIN FALLAVIER (FR); MOUNIE, Cyril, 38070 SAINT QUENTIN FALLAVIER (FR); BERNARD, Freddy, 38070 SAINT QUENTIN FALLAVIER (FR)
(74) Representative: Regimbeau

(56) References cited:
- WO-A1-2010/141032
- WO-A1-2016/102838
- US-A1- 2007 056 480
- US-A1- 2016 376 193

## Description

### FIELD OF THE INVENTION

The invention refers to a continuous method for producing a low density mineral foam of excellent stability. The mineral foam of the present invention is particularly suitable for placing on vertical surfaces, for examples as a layer of thermal insulation on walls.

### BACKGROUND OF THE INVENTION

Mineral foam, also named cement foam, combines advantageous properties such as very low specific weight compared to traditional concrete or other building materials.
It comprises a network of bubbles more or less distant from each other that are gas pockets contained in a solid envelope of mineral binder. Due to the pores or empty spaces that it comprises, it is a material that is significantly lighter than traditional concrete. Mineral foam can be produced by mixing two liquid components, i.e. a cement slurry and a liquid containing a gas-forming agent, to obtain a foaming slurry which expands to form a foamed slurry and then sets and hardens to become said mineral foam. The expansion is the direct consequence of the formation of bubbles upon mixing of the two liquids.
The production of mineral foam involves a step of production of foaming slurry which must be stable. The setting of the liquid foam into solid foam is delicate. The phenomena of destabilization of the foams during setting, such as for example coalescence, Ostwald ripening or drainage must therefore be controlled notably by the production method. These difficulties are exacerbated when the production method is a continuous method wherein the finished product is elaborated in an uninterrupted manner. However, continuous production methods are best suited to an industrial environment and are recommended in plants or on work sites.
One of the difficulties in the continuous production of mineral foams in an industrial context is thus to produce a stable foam offsetting these destabilisation phenomena. By continuous production, we mean the continuous mixing of the liquid components mentioned above, i.e. the cement slurry and the liquid containing the gas-forming agent.
In addition, when this mineral foam is used as insulating material, it is advantageous that the foaming slurry can be projected onto a support, notably a vertical surface. Then it becomes essential that the foaming slurry adheres to this support and that it remains integral with this support up to its solidification. Indeed, when the foam is in its liquid state, it can flow under the effect of gravity and it is important that once on its support, said foam does not flow or does not fall under the effect of gravity.
The foaming slurry may continue to expand after it has been placed on its support.

Patent application WO 2017/041189 discloses a powder suitable for the production of a mineral foam that also contains hydrophobic mineral particles. However, it is not specified whether the process can be continuous or if the slurry can be projected on a wall. The density of the mineral foam is also higher than 170 kg/m³.

Patent application EP2822913 describes a process of preparation of a mineral foam by mixing a cement slurry and a gas forming liquid, with a catalyst precursor, and where the binder is a mixture of cement and lime. However, the density of the mineral foam is of at least 250 kg/m³.

Patent application WO 2016/102838 discloses a mineral foam prepared continuously by mixing a gas-forming liquid and a cement slurry in the presence of catalyst precursors. Mineral additions with a specific contact angle (partially hydrophobic) are also included. The density of the mineral foam is comprised between 70 and 450 kg/m³. However, when applied on a wall, the thickness of one layer of foamed slurry cannot exceed 4 cm.

The present invention aims to provide a method for the continuous production of mineral foam in an industrial context, notably suitable for placing on vertical surfaces.

The present invention also aims to provide mineral foams that have excellent stability properties as well as excellent thermal properties, and notably a very low thermal conductivity.

Following the present invention, upon mixing of the cement slurry and gas-forming liquid, the gas-forming agent starts to react to form bubbles in the slurry. Due to the specific features of the cement slurry and gas-forming liquid used in the present invention, the bubbles that form in the foaming slurry do not coalesce and remain homogeneously distributed within the resulting foamed slurry. The immediate result is a foaming slurry that remains stable until the cement sets and hardens, i.e. in which the air bubbles are homogeneously distributed in the volume of the cement foam. The final result is a low density mineral foam, suitable for example for thermally insulating buildings and construction elements.

The specific rheologies of the cement slurry, gas-forming liquid, the foaming slurry, and of the resulting foamed slurry are critical features of the present invention:
- the rheology of the cement slurry is adjusted to make it easy to pump, and mix with the gas-forming liquid, as the mixture should rapidly be homogenized. This can be achieved by adjusting the water-cement ratio of the cement slurry, and by the selection of commonly used water-reducing admixtures.
- once the cement slurry and the gas-forming liquid are mixed, the foaming slurry and the resulting foamed slurry are adapted to have a rheological behaviour that prevents the gas bubbles from coalescing, and does not allow the gas bubbles to being released out before the cement sets.
- as one of the main applications of the mineral foam is its use for thermally insulating vertical surfaces, in particular walls, the rheological behaviour enables the foam to adhere to the surface onto which it is applied, and not to flow downwards because of its own weight.
All these features are strongly related to the viscosity and yield stress of cement slurry, gas-forming liquid, and of the resulting foamed slurry.

It was also surprisingly found that adding a viscosity modifying agent to the gas-forming liquid results in a significant increase of the yield stress of the foamed slurry, and also helps to maintain a small bubble size distribution in the mineral foam, even at low density. This last characteristic has a strong impact on the rheology of the foamed slurry, as a smaller particle size distribution of the bubbles increases the air-liquid surface within the foamed slurry, which in turn increases its yield stress.
It was also surprisingly found that by using manganese salts and in particular manganese chloride MnCl₂ as a preferred catalyst precursor, the rheology of the cement slurry, foaming slurry, and foamed slurry are improved for the desired application. It was also found to be optimal for the kinetics of the formation of gas bubbles once the cement slurry and gas-forming liquid are mixed together.

Therefore, the method according to the invention achieves the following advantages:
- the mineral foam is produced in a continuous manner;
- the foaming slurry can be projected and adhere to a support whatever the position of this support and independently of gravity forces;
- when applied on a support, the thickness of one layer of foamed slurry is of at least 5 cm and can notably be up to 11 cm;
- the foaming slurry can be applied on the full height of the wall in one application step;
- the final density (after setting of the cement and drying of the foam) of the mineral foam is low, i.e. comprised between 70 and 170 kg/m³.

### SUMMARY OF THE INVENTION

The invention refers to a method for the continuous production of a low density mineral foam comprising the following steps:
(i) preparing a cement slurry comprising:
   - cement;
   - ultrafine particles of which the D50 is comprised from 10 to 600 nm;
   - a water reducing agent;
   - manganese salts; and
   - water;
(ii) adding to the cement slurry obtained after step (i) a gas-forming liquid comprising:
   - a gas-forming agent; and
   - a viscosity-modifying agent which is a polymer chosen among anionic bio-based polymer, amphiphilic bio-based polymer, alkali swellable acrylic polymer and mixture thereof;
   to obtain a foaming slurry;
(iii) applying the foaming slurry obtained at step (ii) on a support;
(iv) leaving the foaming slurry to expand on the support.

Preferably, the mineral foam has a density in the dry state from 50 to 180 kg/m³, more preferentially from 60 to 170 kg /m³, even more preferentially from 70 to 150 kg/m³.

Advantageously, the cement of the mixture of step (i) is a CEM I, preferentially having a Blaine specific surface area above 5000 cm²/g.

In particular, the gas-forming agent comprised in the gas-forming liquid added in step (ii) is in a concentration of less than 15 wt.% of the weight of the gas-forming liquid, preferably less than 8 wt.%.

Preferably, the gas-forming agent comprised in the gas-forming liquid added in step (ii) is a solution of hydrogen peroxide, a solution of peroxomonosulphuric acid, a solution of peroxodisulfphuric acid, a solution of alkaline peroxides, a solution of alkaline earth peroxides, a solution of organic peroxide, a suspension of particles of aluminium or mixtures thereof, preferably it is a solution of hydrogen peroxide.

In particular, the viscosity-modifying agent comprised in the gas-forming liquid added in step (ii) is an amphiphilic bio-based polymer, preferably chosen among methyl cellulose, methylhydroxyethyl cellulose and hydroxypropylmethyl cellulose.

Advantageously, the cement slurry of step (i) further comprises a mineral addition of which the particles have a D50 comprised from 0.1 to 4 mm.

Preferably, the cement slurry of step (i) further comprises fibres.

Advantageously, the cement slurry of step (i) is obtained by first blending a premix of cement, ultrafine particles and optionally mineral addition, and then adding the water reducing agent, manganese salts and water.

In particular, the gas-forming liquid in step (ii) is added to the cement slurry through at least two points of addition, preferably the addition is an injection.

Preferably, the support used at step (iii) is a wall.

The invention also refers to a support coated by the method of the invention with at least one layer of mineral foam, wherein the thickness of said one layer is of at least 5 cm.

The invention further refers to the use of said support coated by the method of the invention for insulation, in particular for thermal or phonic insulation.

Finally, the invention refers to a device for the continuous production of a mineral foam according to the method of claims 1 to 10, comprising a duct (8) which comprises a first section of duct (9) adapted to transport the foaming slurry, with a length L1 and a diameter D1, starting from a point of addition (5) of the gas-forming liquid, and finishing by connecting with a second section of duct (10), which is the exit point of the device, wherein L1 is comprised between 2 and 20 m, D1 is comprised between 5 and 25 mm, the ratio D1/L1 is comprised between 100 and 1500.

Preferably, in said device, there is no static mixer after the point of addition (5).

Advantageously, said device further comprising a device for multiple injections arranged at the point of addition (5) between the first duct (4) and the second duct (8) and adapted to the addition of the gas-forming liquid.

### BRIEF DESCRIPTION OF THE FIGURES

Figure 1 is a diagram illustrating an exemplary embodiment of a device for implementing the method according to the invention
Figure 2 is a diagram illustrating the principle of measuring a contact angle between a drop of water and a surface.
Figure 3 is a diagram of the shear stress in function of the shear rate of compositions obtained in example 2.
Figure 4 is pictures of supports coated with one layer of different foamed slurries according to the method described in example 4, thus figure 4a represents a support coated with one layer of foamed slurry 1, figure 4b with one layer of foamed slurry 2, figure 4c with one layer of foamed slurry 3, figure 4d with one layer of foamed slurry 4.
Figure 5 is a picture of a support coated with one layer of foamed slurry according to the method described in example 6.
Figure 6 is a diagram illustrating an exemplary embodiment of a device for multiple injections according to the invention.

### DETAILED DESCRIPTION OF EMBODIMENTS OF THE INVENTION

In the present invention, the term foaming slurry refers to the mixture of cement slurry and gas-forming liquid, in which the gas-forming agent reacts to form bubbles, and prior to the setting and hardening of the cement. The term foamed slurry refers to the mixture of cement slurry and gas-forming liquid, once all the gas-forming agent has reacted to form bubbles, and prior to the setting and hardening of the cement.
In the present invention, the term mineral foam describes the foamed slurry once the cement has set and hardened.

### Cement slurry of step (i)

The cement slurry of the present invention comprises cement, ultrafine particles of which the D50 is comprised from 10 to 600 nm, a water reducing agent, manganese salts and water. It can also optionally contain fibres and/or mineral additions.

The cement suitable for producing a mineral foam according to the present invention is preferably a Portland cement.
Portland cement is a mixture of ground Portland clinker, a source of calcium sulfate such as gypsum or anhydrite, optionally mineral components and minor additions, as described in the cement standard NF EN 197-1 published in April 2012.
Preferably, said ground clinker has the following mineralogical composition, % in weight compared to the total weight of the clinker:
- 50 to 80 wt. % of C3S (alite),
- 4 to 40 wt. % of C2S (belite),
- 0 to 20% wt. of C4AF (ferrite or aluminoferrite or brownmillerite),
- 0 to 15% wt. of C3A (aluminate),
and secondary mineral components.
The mineralogical components of the clinker are noted according to the common cement industry notation:
- C represents CaO,
- A represents Al₂O₃,
- F represents Fe₂O₃, and
- S represents SiO₂.
All cement types described in the cement standard NF EN 197-1 published in April 2012 (CEM I, CEM II, CEM III, CEM IV, CEM V) may be used for the preparation of the cement slurry. Also the cement may be a mixture of a CEM I and mineral additions, the mixing being done just prior or during the preparation of the cement slurry.
Preferentially, the cement suitable in the present invention is a CEM I, as described in the cement standard NF EN 197-1 published in April 2012.
Portland cement CEM I comprises at least 95 wt. % of a ground clinker such as described above compared to the total weight of cement.

Advantageously, the cement slurry of the invention comprises from 50 to 60 wt. % of cement compared to the total weight of cement slurry.
In one embodiment of the present invention, the cement is characterized by a Blaine surface of at least 5000 cm²/g. Preferably, the cement is characterized by a Blaine surface comprised from 5000 to 9000 cm²/g.
In particular, the cement is characterized by a Blaine surface of at least 5000 to 8000 cm²/g. Preferably, the cement is characterized by a Blaine surface comprised from 5500 to 8000 cm²/g.
In the present invention, fine cements having a Blaine value of at least 5000 cm²/g can be used without degrading the foam properties, while significantly reducing the water demand of the slurry. This invention enables to have a flowable and pumpable cement slurry without requiring the addition of high amounts of water. This has also the advantage of enabling a reduction of the concentration of gas forming agent in the gas forming liquid. The cement fineness was also demonstrated to reduce the the bubble size.

The cement slurry of the present invention comprises ultrafine particles of which D50 is comprised from 10 to 600 nm.
Advantageously, the cement slurry of the invention comprises from 0.5 to 10 wt. %, preferably from 1 to 7 wt. % of ultrafine particles compared to the total weight of cement slurry.
Advantageously, the ultrafine particles in the cement slurry of the present invention have a liquid-solid contact angle comprised from 30° to 140°, preferably comprised from 40° to 130°, even more preferentially from 70° to 130°.
This contact angle is also called wetting angle. The expression "contact angle" or "wetting angle" is taken to mean the angle formed between a liquid/vapour interface and a solid surface. It is the angle formed between the interface of a liquid and the solid surface on which the liquid is deposited. It is generally considered that a wall is hydrophilic when the static contact angle of a drop of water arranged on the wall is less than around 30 degrees and that the wall is hydrophobic at variable hydrophobic levels when the static contact angle of a drop of distilled water arranged on the wall is greater than around 30 degrees and less than around 140°. The wall is designated superhydrophobic when the static contact angle of a drop of distilled water arranged on the wall is greater than around 140 degrees. To produce a foam from the method according to the invention, it could be desirable that the ultrafine particles of the mixture of step (i) are not superhydrophobic, that is to say do not have a contact angle strictly greater than 140°.

Preferably, the ultrafine particles of the cement slurry of the invention are partially rendered hydrophobic, for example by a stearic acid. It is also possible to speak of functionalization.
Preferably, the ultrafine particles of the cement slurry of the invention are not hydrophilic. The ultrafine particles suitable for the cement slurry of the invention have a D50 comprised from 10 to 600 nm, preferably comprised from 20 to 500 nm, more preferentially comprised from 30 to 200 nm.
The D50, also noted Dᵥ50, corresponds to the 50^{th} percentile of the volume distribution of the size of particles, that is to say that 50 % of the volume is constituted of particles of which the size is less than the D50 and 50 % of size greater than the D50. The D50 can be measured by a laser particle size method described below in the detailed description of embodiments of the invention section.
It may be noted that the ultrafine particles generally comprise elementary particles having a diameter comprised from 10 to 50 nm. These elementary particles may agglomerate to form agglomerated particles having a diameter from 40 nm to 150 nm. These agglomerated particles may agglomerate to form aggregates having a diameter from 100 nm to 600 nm.
The ultrafine particles suitable for the cement slurry of the invention may come from one or more materials selected from calcareous powders, precipitated calcium carbonates, natural and artificial pozzolans, pumice stones, ground fly ashes, hydrated silica, in particular the products described in the document FR 2708592, and mixtures thereof.

The cement slurry of the present invention comprises a water reducing agent.
A water reducing agent is a liquid solution that contains a polymer and other chemicals and that enables the reduction by around 10 to 15 % by weight the quantity of mixing water for a given slurry workability and rheology. The solid content of water reducing agents is typically comprised between 15% and 45%. As an example of water reducing agent may be cited lignosulphonates, hydroxycarboxylic acids, carbohydrates, and other specific organic compounds, such as for example glycerol, polyvinyl alcohol, sodium alumino-methyl siliconate, sulphanilic acid and casein (see Concrete Admixtures Handbook, Properties Science and Technology, V.S. Ramachandran, Noyes Publications, 1984).
Plasticizers are the first generation of water reducing agents. The amount of plasticizer generally depends on the cement reactivity. The lower its reactivity is, the lower amount of plasticizer is needed.

Superplasticizers belong to the new generation of water reducing agents and make it possible to reduce by around 30 % by weight the quantity of mixing water for a given workability time. As an example of superplasticizer, it is possible to cite superplasticizers of PCP type that do not contain any antifoaming agent. The term "PCP" or "polycarboxylate polyoxide" is taken to mean according to the present invention a copolymer of acrylic acids or methacrylic acids; and their esters of poly(ethylene oxide) (POE). The amount of superplasticizer generally depends on the cement reactivity. The lower its reactivity is, the lower amount of superplasticizer is needed.
Preferably, the cement slurry of the present invention comprises from 0.2 to 2.0 wt. %, more preferentially from 0.5 to 1.5 wt. %, of a water reducing agent compared to the total weight of the cement.
When the water reducing agent is used in solution, the quantity is expressed in active ingredient in the solution.

According to an alternative embodiment of the invention, the cement slurry or the mixture obtained after step (ii) of the present invention does not comprise an antifoaming agent, or any agent having the property of destabilizing air bubbles dispersed in a liquid. Some commercially available superplasticizers may contain antifoaming agents and consequently these superplasticizers would not be suitable according to the invention.

According to an alternative embodiment of the invention, the cement slurry according to the invention does not comprise a gas-forming agent.

According to an alternative embodiment of the invention, the cement slurry according to the invention does not comprise a viscosity-modifying agent.

The mixture of step (i) of the method according to the invention could comprise a retarding agent, an accelerating agent or any other as defined in the standard NF EN 934-2 of September 2002.

The cement slurry of the present invention comprises manganese salts as catalyst precursors. It was surprisingly found that when manganese salts are used as catalyst precursors, the rheology of the cement slurry and foaming slurry is improved for placing mineral foam on vertical surfaces. It was also found to be optimal for the kinetics of the formation of gas bubbles once the two liquid components are mixed together. The preferred manganese salt used for this invention is manganese chloride, MnCl₂.

The cement slurry of the invention comprises water.
The total water / cement weight ratio of the cement slurry of the invention is from 0.2 to 2.5 preferably, from 0.3 to 1.5, more preferentially from 0.3 to 1. This total water / cement ratio is defined as being the ratio by weight of the water (E) in the slurry over the sum of the weight cement, ultrafine particles and optionally mineral additions in the slurry.

Advantageously, the cement slurry of the present invention further comprises fibres.
They allow reducing the issues of both delamination and cracking of the mineral foam. Preferably, the fibres are polypropylene fibres that have a length of 6 mm or 12 mm, and a diameter of 18 µm.
More preferably, the fibres have a length of 6 mm and diameter of 18 µm as they limit the formation of lumps of fibres while pumping the cement slurry and the foamed slurry. Advantageously, the amount of fibres is between 0.2 wt. % and 2 wt. % by weight of cement, preferentially 0.2 wt. % and 1 wt. %.

According to an alternative embodiment, the cement slurry of the present invention further comprises a mineral addition such as pozzolan, slag, calcium carbonate, fly ash, sand or mixtures thereof, and of which the particles have a D50 comprised from 0.1 µm to 4 mm. Preferably, the cement slurry of the present invention may comprise from 5 to 50 wt. % of mineral additions, preferably from 10 to 40 wt. %, even more preferably from 10 to 30 wt. %, compared to the total weight of the cement slurry.
The mineral additions suitable for the cement slurry of the present invention are preferably selected from calcium carbonate, silica, ground glass, solid or hollow glass beads, glass granules, expanded glass powders, silica aerogels, silica fumes, slags, ground sedimentary silica sands, fly ashes or pozzolanic materials or mixtures thereof. Preferably the D50 of the particles of mineral additions suitable for the cement slurry of the present invention is comprised from 0.1 to 500 µm, for example from 0.1 to 250 µm, preferably from 0.2 to 500 µm, preferably from 0.25 to 500 µm. The D50 of the mineral particles is preferably from 0.1 to 150 µm, more preferentially from 0.1 to 100 µm, preferably from 0.2 to 150 µm, preferably from 0.25 to 150 µm,.
The mineral additions suitable for the cement slurry of the present invention may be pozzolanic materials (for example as defined in the European standard NF EN 197-1 of April 2012 paragraph 5.2.3), silica fumes (for example such as defined in the European standard NF EN 197-1 of April 2012 paragraph 5.2.7), slags (for example as defined in the European standard NF EN 197-1 of April 2012), materials containing calcium carbonate, for example calcareous materials (for example as defined in the European standard NF EN 197-1 paragraph 5.2.6), siliceous additions (for example as defined in the standard "Concrete NF P 18-509"), fly ashes (for example those as described in the European standard NF EN 197-1 of April 2012 paragraph 5.2.4) or mixtures thereof.
A fly ash is generally a powdery particle comprised in the fumes from coal-fired thermal power stations. It is generally recovered by electrostatic or mechanical precipitation. The chemical composition of a fly ash mainly depends on the chemical composition of the coal burned and of the method used in the power plant from which it comes. The same is true for its mineralogical composition. The fly ashes used according to the invention may be of siliceous or calcic nature.
Slags are generally obtained by rapid cooling of the molten slag coming from the melting of iron ore in a blast furnace. Slags suitable for the mixture of step (i) of the method according to the invention may be selected from granulated blast furnace slags according to the European standard NF EN 197-1 of February 2001 paragraph 5.2.2.
Silica fumes may be a material obtained by reduction of high purity quartz by carbon in electric arc furnaces used for the production of silica and ferrosilica alloys. Silica fumes are generally formed of spherical particles comprising at least 85 % by weight of amorphous silica.
Preferably, the silica fumes suitable for the cement slurry of the present invention may be selected from silica fumes according to the European standard NF EN 197-1 of April 2012 paragraph 5.2.7.
Pozzolanic materials may be natural siliceous or silico-aluminous substances, or a combination thereof. Among pozzolanic materials may be cited natural pozzolans, which are in general materials of volcanic origin or sedimentary rocks, and natural calcinated pozzolans, which are materials of volcanic origin, clays, schists or sedimentary rocks, thermally active.
Preferably, the pozzolanic materials suitable for the cement slurry of the present invention may be selected from pozzolanic materials according to the European standard NF EN 197-1 of April 2012 paragraph 5.2.3.
Preferably, the mineral additions suitable for the cement slurry of the present invention may be calcareous powders and/or slags and/or fly ashes and/or silica fumes. Preferably, the mineral additions are calcareous powders and/or slags.
Other mineral additions suitable for the cement slurry of the present invention are calcareous, siliceous or silico-calcareous powders, or mixtures thereof.

Advantageously, the cement slurry of the present invention has a yield stress between 20 and 80 Pa. It allows optimizing the foamability and the behaviour of the foaming slurry during deposition and at rest, prior to the setting of the cement.

### The gas-forming liquid of step (ii)

The gas-forming liquid of the present invention comprises a gas forming agent and a viscosity modifying agent which is a polymer chosen among anionic bio-based polymer, amphiphilic bio-based polymer and alkali swellable acrylic polymer or mixture thereof.

Advantageously, the gas-forming agent is hydrogen peroxide, peroxomonosulphuric acid, peroxodisulfphuric acid, alkaline peroxides, alkaline earth peroxides, organic peroxide, particles of aluminium or mixtures thereof.
Preferentially, the gas-forming agent is hydrogen peroxide.

In particular, the gas forming agent is diluted in water. When hydrogen peroxide is used, its concentration is comprised betweeen 5 to 40 wt. %.
In a preferred embodiment of the present invention, the concentration of hydrogen peroxide is comprised between 5 and 15 wt. %, more preferably between 5 and 8 wt. % of the total weight of gas-forming liquid. More preferentially, the concentration of hydrogen peroxide is below 8 wt. % compared to the total weight of gas-forming liquid.
It was found that the use of low hydrogen peroxide concentrations was beneficial to reduce the average bubble size, which is critical to generate foam of high yield stress. Using a low concentration of hydrogen peroxide, which is an aggressive chemical oxidizer, is also beneficial for the safety of the people working to implement the present invention.

The gas-forming liquid of the invention comprises a viscosity modifying agent.
In particular, the viscosity modifying agent is a water soluble polymer.
Preferably, the gas-forming liquid of the present invention comprises from 0.01 to 0.10 wt. % of viscosity modifying agent compared to the weight of gas-forming liquid.
The viscosity modifying agent added to the gas-forming liquid is an organic molecule chosen among anionic bio-based polymer, amphiphilic bio-based polymer and alkali swellable acrylic polymer or mixture thereof.
Anionic bio-based polymers are anionic polymers that contain carbon originating from a renewable plant source. In particular anionic bio-based polymers suitable for the gas-forming liquid of the present invention are anionic polymers derived from cellulose, starch or alginate. More particularly, anionic CarboxyMethyl Cellulose, CarboxyMethyl Starch or Alginate are anionic bio-based polymers suitable for the gas-forming liquid of the present invention.
Amphiphilic bio-based polymers are amphiphilic polymers that contain carbon originating from a renewable plant source. In particular, amphiphilic bio-based polymers suitable for the gas-forming liquid of the present invention are amphiphilic polymers derived from cellulose. Methyl Cellulose, MethylHydroxyEthyl Cellulose or HydroxyPropylMethyl Cellulose are amphiphilic bio-based polymers suitable for the gas-forming liquid of the present invention.
Alkali Swellable Acrylic polymers are copolymers of (meth)acrylic acid with a non-watersoluble ester of said acid.
Preferably, the viscosity modifying agent is an amphiphilic bio-based polymer. More preferably the viscosity modifying agent is an amphiphilic polymer derived from cellulose. Even more preferably the viscosity modifying agent is chosen among Methyl Cellulose, MethylHydroxyEthyl Cellulose, HydroxyPropylMethyl Cellulose and mixture thereof. Amphiphilic bio-based polymers increase the yield stress of the continuous phase in the foaming slurry and do not affect, or may even decrease the bubble size of the foaming slurry. When compared to hydrophilic polymers, these polymers are amphiphilic and can then adsorb onto the surface of the bubbles of the foamed slurry.
By mixing the viscosity-modifying agent and gas-forming agent beforehand, the viscosity-modifying agent is then directly in the vicinity of the nucleating bubbles, stabilizing them rapidly and effectively. The particular rheological features of the foamed slurry of the present invention are attributed to the combination of the high yield stress of the continuous phase of the foaming slurry with the efficient stabilization of the bubbles by the organic molecules. This facilitates the application of the foaming slurry onto vertical surfaces, and enables to increase the thickness of a layer of foamed slurry deposited on the wall. According to the present invention, a single layer deposited on a support can have a thickness of at least 5 cm and up to 11 cm. Moreover using these polymers enables to obtain a foamed slurry of a density comprised between 80 kg/m³ and 150 kg/m³ while maintaining high yield stress values.

The mixture of step (ii) of the method according to the invention could comprise a retarding agent, an accelerator or any other admixture as defined the European standard NF EN 934-2 of September 2002.

### The foaming slurry obtained after step (ii)

In the present invention, the term foaming slurry refers to the mixture of cement slurry and gas-forming liquid, in which the gas-forming agent reacts to form bubbles, and prior to the setting and hardening of the cement. After all the gas-forming agent has reacted to form bubbles, a foamed slurry is then left to rest until the cement sets and hardens.
The foaming slurry is obtained after step (ii) of the method according to the present invention wherein the gas-forming liquid is added to the cement slurry. From that step onwards, the gas-forming agent reacts and the catalyst precursor, included in the cement slurry, helps the nucleation and growth of the bubbles. The foaming slurry swells continuously until all the gas-forming agent has reacted.

Preferably, the foaming slurry flows through a duct and is applied onto a support.
When the foaming slurry is applied onto the support, and once the expansion is finished, the thickness of one layer of foamed slurry is of at least 5 cm, preferably of at least 6 cm, more preferably of at least 7 cm.

Preferably, the cement used for slurry has an initial setting time comprised between 80 and 150 minutes, and a final setting time 150 and 250 minutes at room temperature, also when additional admixtures, including accelerators or retarders, are added. The setting time is measured according to the standard NF EN 196-3 published in January 2009.

In particular, the wet density of the foamed slurry of the invention in the fresh state after expansion is comprised between 80 and 150 kg/m³.

### The process of the invention

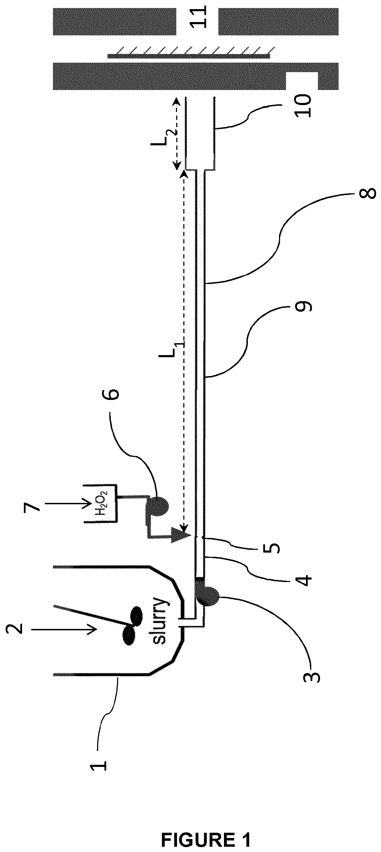

The process will be disclosed with the device for the continuous production of a mineral foam specifically developed for the invention.
The device of the invention comprises a duct (8) which comprises a first section of duct (9) adapted to transport the foaming slurry, with a length L1 and a diameter D1, starting from a point of addition (5) of the gas-forming liquid, and finishing by connecting with a second section of duct (10) with a length L2 and a cross-section D2, which is the outlet of the device (see figure 1).

In the present invention, the term duct refers to an elongated cavity with a cross-section that can be circular or polygonal. In particular, it can be a pipe or a tube.

The method according to the invention is a continuous method wherein the finished product is elaborated in an uninterrupted manner.
The process of the invention consists in several steps:
(i) preparing a cement slurry of the invention,
(ii) adding to the cement slurry a gas-forming liquid of the invention,
(iii) applying the mixture obtained at step (ii) on a support,
(iv) leaving the mixture to expand on the support.

In a preferred embodiment, the cement slurry is prepared by first blending a premix of cement, ultrafine particles and optionally mineral additions comprised in the cement slurry of the invention. Said premix is constituted of all the solid constituents except the fibres of the cement slurry of the invention. This step is highly beneficial to the properties of the mineral foam, as it enables to reduce the preparation time of the mineral foam, and also reduces the water demand of the cement slurry.
The cement slurry is then obtained by adding the premix to a solution of water reducing agent and manganese salts in water, and optionally adding subsequently the fibres.

Preferably, in step (i), the cement slurry is continuously stirred to avoid any deposition from occurring.
The device of the invention may comprise a vessel provided with a stirrer (1) adapted to contain said cement slurry.

In particular, after being prepared, the cement slurry is pumped into a first duct (4).
The device of the invention may comprise a first duct (4) and a first pump (3) adapted to pump and transport the cement slurry.
Preferably, the cement slurry is pumped in the first duct (4) with a flow rate comprised between 5 and 35 kg/min.

Preferably, the gas-forming liquid is added to the cement slurry through at least two points of addition. More preferably, the addition of gas-forming liquid to the cement slurry is done by multiple injections, in particular symmetrical double injection.
The multiplicity of the number of injection points is beneficial to the homogeneity of the foamed slurry.
The resulting foaming slurry flows through a second duct (8).

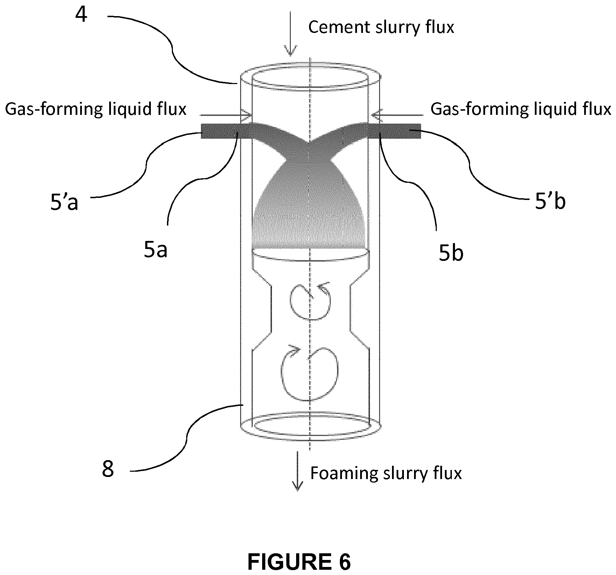

Preferably, the device of the invention comprises a device for multiple injections arranged at the point of addition (5) between the first duct (4) and the second duct (8), and adapted to the addition of the gas-forming liquid.
In particular, the device for multiple injections is a symmetric double injection system which allows adding the gas-forming liquid by two points of injections (5a) and (5b). The two points of injection (5a) and (5b) are facing each other.
In particular, tubes (5'a) and (5'b) are adapted to transport the gas-forming liquid to the point of injections (5a) and (5b) respectively (see figure 6).
Preferably, the device for multiple injections is a supply connection linking the first duct (4), the second duct (8) and the two tubes (5'a) and (5'b). In particular the device for multiple injections is a cross-connection.
Preferably, after the points of injection (5a) and (5b), the cross-section of the device for multiple injections is reduced. The reduction of the cross-section of the device for multiple injections allows a better mixing of the cement slurry and the gas-forming liquid.

Advantageously, the second duct (8) that transports the foaming slurry to the support comprises two sections (9) and (10), the last section (10) at the exit point being shorter and having a larger cross section. This facilitates the application of the foam onto the wall, and accommodates for the increasing volume of the foaming slurry due to the continued formation of bubbles.

The first section of the second duct (9) has a length L1 and a diameter D1.
Preferably, the first section of the second duct (9) has a length L1 comprised between 2 and 20 m, and a diameter D1 comprised between 5 and 25 mm.
Advantageously, the ratio L1/D1 is comprised between 100 and 1500.
It was found that a pressure increase in the duct is highly beneficial both to the robustness and for the reduction of the average size of the bubbles, which provides a higher yield stress to foam. The pressure increase in the second duct should preferentially come from an adjustment of both D1 and L1, and not from adjusting the pressure through a single duct of narrowing diameter, as this may break the foam.
Preferably the pressure in the first section of the second duct (9) is comprised between 3.5 and 10 bars, more preferably, between 4 and 6 bars.
Such a pressure is obtained due to the chemical expansion that starts to take place in the second duct and can be modulated by adjusting the length L1 and diameter D1 of the first section of the duct.

In one possible embodiment, the cement slurry is pumped to the point of addition (5) with a lower flow rate comprised between 7.0 and 11.0 kg/min. In this case, the gas forming liquid is pumped to the same point of addition (5) at a rate between 2 and 4 kg/min.
The ratio between the flow rate of cement slurry and gas forming agent is between 2 and 4, preferentially between 2.5 and 3.5.
Preferably the pressure in the first section of the second duct (9) is comprised between 3.5 and 10 bars, more preferably, between 4 and 6 bars.
Such a pressure is obtained due to the chemical expansion that starts to take place in the second duct and can be modulated by adjusting the length L1 and diameter D1 of the first section of the duct.
Preferably, the first section of the second duct (9) has a length L1 comprised between 5 and 15 m, and a diameter D1 comprised between 5 and 15 mm.

In another possible embodiment, the cement slurry is pumped to the point of addition (5) with a higher flow rate comprised between 20 and 35 kg/min. In this case, the gas forming liquid is pumped to the same point of addition (5) at a rate between 7 and 11 kg/min.
The ratio between the flow rate of cement slurry and gas forming agent is between 2 and 4, preferentially between 2.5 and 3.5.
Preferably the pressure in the first section of the second duct (9) is comprised between 3.5 and 10 bars, more preferably, between 4 and 6 bars.
Such a pressure is obtained due to the chemical expansion that starts to take place in the second duct and can be modulated by adjusting the length L1 and diameter D1 of the first section of the duct.
Preferably, the first section of the second duct (9) has a length L1 comprised between 5 and 15 m, and a diameter D1 comprised between 10 and 20 mm.

The mass flow rate of cement slurry and mass flow rate of gas-forming liquid ratio enables controlling the wet density of the foamed slurry. In particular, to reach a wet density of the foamed slurry in the fresh state after expansion between 80 and 150 kg/m³, the mass flow rates ratio are comprised between 2 and 4, more preferably between 2.3 and 3.5.

The second section of the second duct (10) has a length L2 and a cross-section D2. Preferably, L2 is comprised between 50 and 500 mm, more preferably between 100 and 300 mm.
The cross section D2 may be circular or polygonal.

Indeed, since the yield stress of the slurry is increased in the present invention, it is observed that the foaming slurry deposited on the wall maintains more or less the initial shape given by the duct outlet, even once fully expanded. Therefore, the second section of the duct (10) could be in a different shape than a tube.
Alternatively the second section of the duct (10) has a circular cross-section.
Alternatively the second section of the duct (10) has a polygonal cross-section, preferably a rectangular or a square cross-section. In this case, the diagonal of the cross-section D2 represents the length of the longest straight line which fits in the cross-section of the section of the duct.
The size and shape of the cross section D2 depends on the higher or lower flow rate selected as described above.
In case of a lower flow rate, the diameter or the diagonal of the cross-section D2 is comprised between 11 and 31 mm, preferably between 16 and 26 mm. In this case, preferably, the cross-section is a square.
In case of a higher flow rate, the diameter or the diagonal of the cross-section is between 50 and 110 mm, preferably between 60 and 100 mm. In this case, preferably, the cross-section is a rectangle.

Since the surface of the exit drives the mean velocity of the flow of foaming slurry at the outlet, the total surface of the exit is preferably adapted so that the mean velocity is of less than 2 m/s and even preferentially less than 1 m/s but remains above 0.4 m/s. Too high velocities generate undesirable rebounds of the foaming slurry on the support, and too low velocities negatively affect the adhesion of the foaming slurry on the support.

The cement slurry is thus deposited on the support by the sole means of the output jet, which maintains its integrity up to the point of deposition.

When the support is vertical, such as a wall, the foaming slurry can be applied on the full height of the vertical support in one application step.

Figure 1 is a diagram illustrating an exemplary embodiment of a device for implementing the method according to the invention.
In the example shown in figure 1, the device comprises a vessel provided with a stirrer (1), a first pump (3), a first duct (4), a point of addition (5), a second pump (6), a recipient (7), a second duct (8) comprising a first section (9) and a second section as exit point element (10). The mixture (2) is the cement slurry, and is contained in the vessel (1). The gas-forming liquid is contained in the recipient (7). The cement slurry and the gas-forming liquid are continuously pumped independently by the pumps (3) and (6) and the gas-forming liquid is added and mixed to the cement slurry by multiple injection. The dimensions (L1) and (D1) of the first section of the duct (9) and the dimensions (L2) and of (D2) of the outlet element (10) are chosen in such a way that the head losses in the duct remain compatible with the characteristics of the discharges, such as the flow rates and the speeds at the exit point of the duct, and with the pumping means. The first section of the duct (9) and the outlet element (10) are also chosen as a function of the speed of release of oxygen in the duct, and in particular the ratio between the expected release in the duct and that expected after the outlet of the duct, and the regularity of the flow. Other embodiments of a device for applying the method according to the invention may be envisaged.

### The support coated with mineral foam

The invention also relates to a support coated by the method of the invention with at least a layer of mineral foam, wherein the thickness of said one layer is of at least 5 cm, preferably of at least 6 cm, more preferably of at least 7 cm.
Preferably, the layer of mineral foam of the invention has a thickness comprised between 5 and 15 cm, more preferably between 6 and 13 cm, even more preferably between 6 and 11 cm.
It is important to underline that the thickness of the mineral foam is not significantly different to the thickness of the foamed slurry.

The support is covered by one layer by depositing the foaming slurry coming out of the outlet section (10) of the device and progressively varying the position of the deposition point until the support is entirely covered by the foam after complete expansion.

Previously, in order to obtain a suitable thickness of mineral foam on the support, several layers had to be deposited on the support. A first layer was deposited and left for a time until the expansion was complete and the setting had started. The operation was then reiterated at least a second time to obtain the desired thickness. The resulting mineral foam was not uniform as it was obtained through several layers.
Advantageously, the method of the invention allows obtaining a layer of mineral foam with a thickness of at least 5 cm so that a single coating is sufficient to achieve the advantages of the invention in terms of thermal insulation. This implies that the coated support is obtained faster, and the mineral foam is uniform as only one layer of the initial foaming slurry had to adhere on the support, expand and set.
In addition, the full height of the vertical support can be coated in one application step.

The mineral foam obtained by the method of the invention shows specific properties.
Preferably, the mineral foam has a density in the dry state from 50 to 180 kg/m³, more preferentially from 60 to 170 kg /m³, even more preferentially from 70 to 150 kg/m³. It may be noted that the density of the foamed slurry, i.e. in the fresh state (wet density), differs from the density of the mineral foam in the dry state, that is to say after setting and drying (density of hardened material). The density of the foamed slurry in the fresh state is always greater than the density of the foam in the dry state.
The invention has the benefit of providing a mineral foam with considerable lightness, and notably a very low density.
Additionally, the mineral foam obtained with the method of the invention has excellent stability properties. Notably the bubbles that compose the mineral foam in the fresh state are little degraded after pouring into the mould or depositing on the support.

The support may be of different natures and different shapes.
The support may be a receptacle to fill. In this case, it is envisaged to fill building blocks with the mineral foam according to the invention. For example, they may be building blocks, terra cotta blocks, cellular concrete blocks that it is wished to fill with the foam according to the invention.
The support may be a wall to cover with mineral foam obtained with the method of the invention. For example, it may be a concrete cast wall, a shuttered concrete, a wall of building blocks, a wall of terra cotta blocks, a wall of cellular concrete blocks, a wall covered with mortar or render.
In the present invention, the term wall refers to any surface that is at an angle of between 0° and 20° with the direction of the force of gravity.
The support may be of different natures such as concrete, terracotta, plaster, untreated wood, plasterboard, cardboard sheet, or any other material used in building.
The support may be treated before deposition of the foam. The treatment could for example consist in one or more projections of water, the projection of setting accelerator solutions such as aluminium sulphate, or the treatment could consist in the deposition of bonding primers, or any other solution of physical or chemical nature making it possible to accelerate the setting of the cement at the interface between the support and the mixture, or to enable better long term adhesion of the mixture on the support or to increase the roughness of the support.
The support preferably comprises at least one framework or structural element. This framework may be made of concrete (columns/beams), metal (uprights or rails), wood, plastic or composite material or synthetic material. The mineral foam according to the invention may also coat a structure for example of wire mesh type (plastic, metal) or a pillar or beam of a building.
When the support is a wall, said wall could be provided with elements which facilitate the adherence of the foam, for example metal wire meshes or wire meshes based on plastic materials, spaced or not from the wall, and integral or not with the wall. Vertical armatures could be positioned along the wall to serve as anchoring points for wire meshes. These wire meshes could be simple horizontal wires.

Advantageously, the support may be coated with the method of the invention by blinding or filling of an empty or hollow space of a building, a wall, a partition, a masonry block for example a breeze-block, a brick, of a floor or of a ceiling. Such materials or composite building elements comprising the mineral foam according to the invention are also coated support of the invention per se.
Advantageously, the support may be coated with the method of the invention by the façade covering, for example to insulate a building from the outside. In this case, the support may be coated with a finish coat.
The coating of the support of the invention may happen onto walls on a worksite.

The invention also relates to the use of the support coated by the method of the invention with at least a layer of mineral foam as building material. For example, the coated support may be walls, floors, roofs on a worksite. It is also envisaged to produce elements prefabricated in a precast factory from the foam according to the invention such as blocks, panels.

The invention also relates to the use of the support coated by the method of the invention with at least a layer of mineral foam for insulation, in particular for thermal or phonic insulation.
Advantageously, it is possible in certain cases to replace glass wool, asbestos or insulants made of polystyrene and polyurethane with the mineral foam obtained with the method of the invention.

Thus, the invention offers as other advantage that the mineral foam obtained with the method of the invention has excellent thermal properties, and notably a very low thermal conductivity. Reducing the thermal conductivity of building materials is highly desirable since it makes it possible to obtain a saving in heating energy in residential or working buildings. In addition, the mineral foam obtained with the method of the invention makes it possible to obtain good insulation performances over small thicknesses and thus to preserve the surfaces and habitable volumes. The thermal conductivity (also called lambda (λ)) is a physical quantity characterizing the behavior of materials during the transfer of heat by conduction. The thermal conductivity represents the quantity of heat transferred per surface unit and per time unit under a temperature gradient. In the international units system, the thermal conductivity is expressed in watts per Kelvin meter, (W·m⁻¹·K⁻¹). Classical or traditional concretes have a thermal conductivity between 1.3 and 2.1 measured at 23°C and 50 % relative humidity.

The mineral foam obtained with the method of the invention has a thermal conductivity comprised from 0.03 to 0.5 W/(m.K), preferably from 0.04 to 0.15 W/(m.K), more preferentially from 0.04 to 0.10 W/(m.K).
The invention has also the benefit of providing a mineral foam having good mechanical properties, and notably good compressive strength compared with known mineral foams. The mineral foam obtained with the method of the invention has a compressive strength comprised from 0.04 to 5 MPa after 28 days, preferably from 0.05 to 2 MPa after 28 days, more preferentially from 0.05 to 1 MPa after 28 days.

The support coated according to the invention is advantageously capable of withstanding or reducing air and thermo-hydric transfers, that is to say that this element has a controlled permeability to transfers of air, of water in the form of vapour or liquid.

The support coated according to the invention may be used to produce or manufacture a cladding, an insulation system, or a partition, for example a separating partition, internal partition or a rigid wall lining.

### DETAILED DESCRIPTION OF EMBODIMENTS OF THE INVENTION

### Method for measuring a wetting or contact angle:

Figure 1 illustrates the principle for measuring a wetting angle between a solid surface 10 of a sample 12 made of concrete and a drop 14 of a liquid deposited on the surface 10.

The reference 16 designates the liquid/gas interface between the drop 14 and ambient air. Figure 1 is a cross-section along a plane perpendicular to the surface 10. In the section plane, the wetting angle α corresponds to the angle, measured from the inside of the drop 14 of liquid, between the surface 10 and the tangent T to the interface 16 at the point of intersection between the solid 10 and the interface 16.
To carry out the measurement of the wetting angle, the sample 12 is placed in a room at a temperature of 20°C and a relative humidity of 50 %. A drop of water 14 having a volume of 2.5 µL is placed on the surface 10 of the sample 12. The angle measurement is carried out by an optical method, for example using a drop shape analysis device, for example the DSA 100 device commercialised by Kruss. The measurements are repeated five times and the value of the contact angle measured between the drop of water and the support is equal to the average of these five measurements.

### Method for measuring the particle size distribution

The particle size curves of the different powders are obtained from a Mastersizer 2000 (year 2008, series MAL1020429) type laser particle size analyser sold by the Malvern Company.
The measurement is carried out in an appropriate medium (for example, in aqueous medium) in order to disperse the particles; the size of the particles must be comprised from 1 µm to 2 mm. The luminous source is constituted of a red He-Ne laser (632 nm) and a blue diode (466 nm). The optical model is that of Fraunhofer, the calculation matrix is of polydisperse type.
A background noise measurement is firstly carried out with a pump speed of 2000 rpm, a stirrer speed of 800 rpm and a noise measurement over 10 s, in the absence of ultrasounds. It is then checked that the luminous intensity of the laser is at least equal to 80 %, and that a decreasing exponential curve is obtained for the background noise. If this is not the case, the lenses of the cell have to be cleaned.
A first measurement is next carried out on the sample with the following parameters: pump speed of 2000 rpm, stirrer speed of 800 rpm, absence of ultrasounds, obscuration limit between 10 and 20 %. The sample is introduced to have an obscuration slightly greater than 10 %. After stabilisation of the obscuration, the measurement is carried out with a duration between the immersion and the measurement set at 10 s. The measurement is 30 s (30000 diffraction images analysed). In the granulogram obtained, it is necessary to take account of the fact that a part of the population of the powder may be agglomerated.

A second measurement is then carried out (without emptying the vessel) with ultrasounds. The pump speed is taken to 2500 rpm, the stirring to 1000 rpm, the ultrasounds are emitted at 100 % (30 watts). This regime is maintained for 3 minutes, then the initial parameters are returned to: pump speed of 2000 rpm, stirrer speed of 800 rpm, absence of ultrasounds. At the end of 10 s (to evacuate potential air bubbles), a 30 s measurement (30000 images analysed) is carried out. This second measurement corresponds to a powder de-agglomerated by ultrasound dispersion.
Each measurement is repeated at least twice to check the stability of the result. The apparatus is calibrated before each working session by means of a standard sample (silica C10 Sifraco) of which the particle size curve is known. All the measurements presented in the description and the ranges announced correspond to the values obtained with ultrasounds.

### Method for measuring the BLAINE specific surface area

The specific surface of the different materials is measured as follows.
The Blaine method at 20°C with a relative humidity not exceeding 65 % using a Blaine Euromatest Sintco apparatus complying with the European standard EN 196-6.
Before the measurement of the specific surface, the wet samples are dried in an oven until a constant weight is obtained at a temperature from 50 to 150°C (the dried product is next ground to obtain a powder of which the maximum size of the particles is less than or equal to 80 µm).

### Method for measuring the yield stress of the slurry

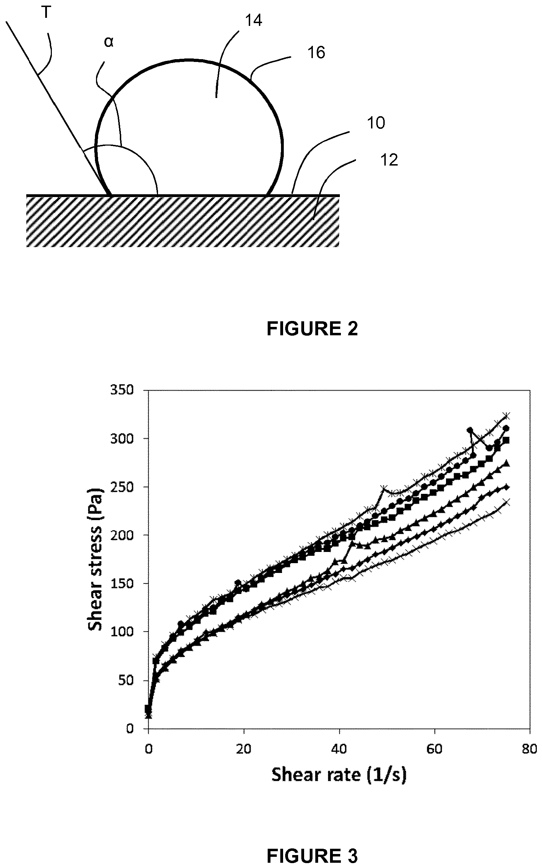

The rheology measurement of the cement slurry is done with a rheometer (Anton Paar RheolabQC) with a double-helix ribbon geometry after 30 minutes after the first contact between water and premix. The protocol used is:
- pre-shearing at 50 s⁻¹
- Ramp from 0.01 to 75 s⁻¹
- Ramp from 75 to 0.01 s⁻¹.
An example of the result is shown on figure 3. Each curve represents of cement slurry preparation.
The rheological measurement provides a curve giving the the shear rate as a function of shear stress. The analysis of that curve enables to determine the yield stress: the yield stress corresponds to the Y-intercept of the linear part of the curve, wherein the linear part is typically in the range of 20 to 60 s⁻¹.

### Method for measuring the wet density of the foamed slurry

The foamed slurry is poured in a cylinder 11x22cm i.e. with a known volume. The density of the foamed slurry is the ratio between the mass of the foamed slurry to fill the cylinder and the volume of the cylinder. The weight foamed slurry is measured 1-5 minutes after the foaming.

### Example 1: Preparation of the cement slurry

The cement slurry is prepared by mixing the components of the table 1 into the respective proportions given in the table.

**Table 1:**

| Components | Formulation (wt. %*) |
|---|---|
| Premix** | 75.4 |
| Superplasticizer | 0.79 |
| MnCI2 | 0.77 |
| Fibres | 0.34 |
| Water | 22.7 |
| Total | 100 |

| | |
|---|---|
| *the values are expressed as percentages in weight by total weight of cement slurry. **the premix is composed of 73.0 wt. % of cement CEM I and 22.0 wt. % of mineral addition (ground limestone filler Betocarb supplied by Omya) and 5.0 wt. % of Socal312. The cement CEM I is an ultrafine cement having a Blaine Value of 7200 cm/g². | |

The cement slurry is mixed in double-walled tank (to keep the cement slurry temperature at 20°C) with a bench agitator (Supertest VMI) with defloculating blade according the following protocol:
- Pouring the water in the tank and then adding and mixing (300 rpm) the superplasticizer and the catalyzer until dissolution
- Pouring slowly the premix powder into the tank during 15 minutes with an agitation speed of 900 rpm.
- Adding the fibres in the slurry and mixing during 5 minutes.

### Example 2: Preparation of the gas forming liquid

The gas forming liquid is prepared by mixing the components of the table 2 into the respective proportions given in the table.

**Table 2:**

| Components | Formulation (wt. %)* |
|---|---|
| H₂O₂ | 7.00 |
| Amphiphilic polymer (Walocel MKW 4000 PF produced by Dow) | 0.035 |
| Water | 92.965 |

| | |
|---|---|
| *the values are expressed as percentages in weight by total weight of gas forming liquid. | |

A solution of polymer at 1 wt. % is prepared and then mixed with a solution of H₂O₂ at 30 wt. %. Then, the water is poured and mixed manually.

### Example 3: Process of application of the mineral foam onto a vertical surface

The mineral foam is applied onto a vertical surface with a device as illustrated in Figure 1.

The cement slurry is continuously pumped by means of a screw pump (Seepex (I) brand) in a main tube of 10 mm diameter with a flow rate of 9 kg/min. The gas-forming liquid is pumped by means of another screw pump (Seepex (II) brand) with a flow rate of 3-3.5 kg/min, and continuously injected by a symmetric double injection system into the tube in which the cement slurry flows. The tube downstream the point of addition of the gas-forming liquid is of a length of L1 = 9 m, and a diameter of D1 = 10 mm.

The pressure before the point of addition (5) is between 3.5 and 10 bars, with a preference for the 4-6 bars range.

The tube is equipped with an ending that may be circular, rectangular or square, which increases to 15x15 mm the size of the outlet tubing over a length 20 cm.
It will be observed that the paste obtained at the outlet of the applicator is only partially aerated (less than 50 % of the total fraction of oxygen is incorporated in the paste at this stage) and its expansion continues after deposition. The paste is deposited on the wall by the sole means of the output jet, which maintains its integrity up to the point of deposition. The density of the foamed slurry in the fresh state after expansion is measured.
The wall is covered by progressively varying the position of the deposition point, until the wall is entirely covered by the foam after complete expansion. The system is left as is until the setting of the cement has started, i.e. around 2 hours at room temperature. The thickness of the layer is measured.

### Example 4: Target final wet density of foamed slurry = 140-150 kg/m³

Foamed slurries 1 to 4 are obtained following the process described in example 3. Foamed slurry 1 is a comparative example and foamed slurries 2 to 4 are examples according to the invention.
The compositions of the cement slurries and gas-forming liquids comprised in foamed slurries 1 to 4 are reported in Table 3:

**Table 3:**

| | Foaming slurry 1 | Foaming slurry 2 | Foaming slurry 3 | Foaming slurry 4 |
|---|---|---|---|---|
| Cement slurry | | | | |
| Premix | 75.4 | 75.4 | 75.4 | 75.4 |
| Superplasticizer | 0.79 | 0.79 | 0.79 | 0.79 |
| MnCI2 | 0.77 | 0.77 | 0.77 | 0.77 |
| Fibres | 0.34 | 0.34 | 0.34 | 0.34 |
| water | 22.7 | 22.7 | 22.7 | 22.7 |

| **Gas-forming liquid** | | | | |
|---|---|---|---|---|
| H₂O₂ | 7 | 7 | 7 | 7 |
| Walocel MKW 4000 PF | 0.00 | 0.02 | 0.03 | 0.04 |
| water | 93 | 92.98 | 92.97 | 92.96 |

The wet density and thickness after one layering are measured and are reported in Table 4:

**Table 4:**

| | Foamed slurry 1 | Foamed slurry 2 | Foamed slurry 3 | Foamed slurry 4 |
|---|---|---|---|---|
| Wt. % of Walocel MKW 4000 PF in the gas-forming liquid | - | 0.02 | 0.03 | 0.04 |
| Wet density (kg/m³) | 160 | 144 | 138 | 136 |
| Thickness (cm) | 4.0 | 7.4 | 8.1 | 8.6 |
| aspect | unacceptable (see fig. 4a) | acceptable (see fig. 4b) | good (see fig. 4c) | good (see fig. 4d) |

### Example 5: Target wet density of foamed slurry density = 100-110 kg/m³

Foamed slurries 5 to 9 are obtained following the process described in example 3. Foaming slurry 5 is a comparative example and foamed slurries 6 to 9 are examples according to the invention.
The compositions of the cement slurries and gas-forming liquids comprised in foamed slurries 5 to 9 are reported in Table 5:

**Table 5:**

| | Foaming slurry 5 | Foaming slurry 6 | Foaming slurry 7 | Foaming slurry 8 | Foaming slurry 9 |
|---|---|---|---|---|---|
| Cement slurry | | | | | |
| Premix | 75.4 | 75.4 | 75.4 | 75.4 | 75.4 |
| Superplasticizer | 0.79 | 0.79 | 0.79 | 0.79 | 0.79 |
| MnCl₂ | 0.77 | 0.77 | 0.77 | 0.77 | 0.77 |
| Fibres | 0.34 | 0.34 | 0.34 | 0.34 | 0.34 |
| water | 22.7 | 22.7 | 22.7 | 22.7 | 22.7 |

| **Gas-forming liquid** | | | | | |
|---|---|---|---|---|---|
| H₂O₂ | 7 | 7 | 7 | 7 | 7 |
| Walocel MKW 4000 PF | 0 | 0.02 | 0.03 | 0.04 | 0.08 |
| water | 93 | 92.98 | 92.97 | 92.96 | 92.92 |

The wet density and thickness after one layering are measured and are reported in Table 6:

**Table 6:**

| | Foaming slurry 5 | Foaming slurry 6 | Foaming slurry 7 | Foaming slurry 8 | Foaming slurry 9 |
|---|---|---|---|---|---|
| Wt. % of Walocel MKW 4000 PF in the gas-forming liquid | - | 0.02 | 0.03 | 0.04 | 0.08 |
| Wet Density (kg/m³) | 104 | 98 | 102 | 107 | 114 |
| Thickness (cm) | 4.0 | 7.3 | 9.5 | 7.5 | 8.5 |

### Example 6: effect of the use of square endings

The memory of the shape is clearly visible on the deposited foamed slurry. Square exits enable a better connection between the ropes than cylindrical exits.

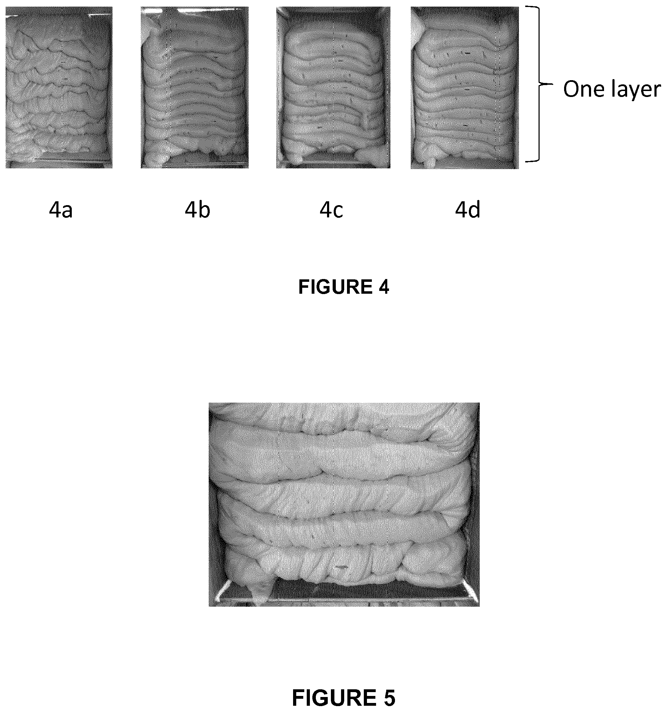

See Figure 5.

### Example 7: mineral foams that do not work

**Table 7:**

| | Foaming slurry 10 | Foaming slurry 11 | Foaming slurry 12 |
|---|---|---|---|
| **Cement slurry** | | | |
| Premix | 75.4 | 75.4 | 75.4 |
| Superplasticizer | 0.79 | 0.79 | 0.79 |
| MnCl₂ | 0.77 | 0.77 | 0.77 |
| Fibers | 0.34 | 0.34 | 0.34 |
| water | 22.7 | 22.7 | 22.7 |

| **Gas-forming liquid** | | | |
|---|---|---|---|
| H₂O₂ | 7 | 7 | 7 |
| Viscosity modifying agent | Gelatin 0.035 | Polyvinyl alcohol 0.035 | Polyethylene imine 0.035 |
| water | 92.965 | 92.965 | 92.965 |

When gelatin, polyvinyl alcohol or polyethyleneimine are used as viscosity modifying agents and all at the same dosage, the mineral foams destabilises and collapse, confirming that these polymers are not suitable for this invention.

## Claims

1. A method for the continuous production of a low density mineral foam comprising the following steps:
(i) preparing a cement slurry comprising:
- cement;
- ultrafine particles of which the D50 is comprised from 10 to 600 nm;
- a water reducing agent;
- a manganese salt; and
- water;
(ii) adding to the cement slurry obtained after step (i) a gas-forming liquid comprising:
- a gas-forming agent; and
- a viscosity-modifying agent which is a polymer chosen among anionic bio-based polymer, amphiphilic bio-based polymer, alkali swellable acrylic polymer and mixture thereof;
to obtain a foaming slurry;
(iii) applying the foaming slurry obtained at step (ii) on a support;
(iv) leaving the foaming slurry to expand on the support.

2. The method according to claim 1 wherein the mineral foam has a density in the dry state from 50 to 180 kg/m³, preferentially from 60 to 170 kg /m³, more preferentially from 70 to 150 kg/m³.

3. The method according to any of the preceding claims wherein the cement of the mixture of step (i) is a CEM I, preferentially having a Blaine specific surface area above 5000 cm²/g.

4. The method according to any of the preceding claims wherein the gas-forming agent comprised in the gas-forming liquid added in step (ii) is in a concentration of less than 15 wt.% of the weight of the gas-forming liquid, preferably less than 8 wt.%.

5. The method according to any of the preceding claims wherein the gas-forming agent comprised in the gas-forming liquid added in step (ii) is a solution of hydrogen peroxide, a solution of peroxomonosulphuric acid, a solution of peroxodisulfphuric acid, a solution of alkaline peroxides, a solution of alkaline earth peroxides, a solution of organic peroxide, a suspension of particles of aluminium or mixtures thereof, preferably it is a solution of hydrogen peroxide.

6. The method according to any of the preceding claims wherein the viscosity-modifying agent comprised in the gas-forming liquid added in step (ii) is an amphiphilic bio-based polymer, preferably chosen among methyl cellulose, methylhydroxyethyl cellulose and hydroxypropylmethyl cellulose .

7. The method according to any of the preceding claims wherein the cement slurry of step (i) further comprises a mineral addition of which the particles have a D50 comprised from 0.1 µm to 4 mm.

8. The method according to any of the preceding claims wherein the cement slurry of step (i) further comprises fibres.

9. The method according to any of the preceding claims wherein the cement slurry of step (i) is obtained by first blending a premix of cement, ultrafine particles and optionally mineral addition, and then adding the water reducing agent, manganese salt and water.

10. The method according to any of the preceding claims wherein the gas-forming liquid in step (ii) is added to the cement slurry through at least two points of addition, preferably the addition is an injection.

11. The method according to any of the preceding claims wherein the support used at step (iii) is a wall.

12. A support coated by the method of claims 1 to 11, with at least one layer of mineral foam, wherein the thickness of said one layer is of at least 5 cm.

13. Use of the support coated according to claim 12 for insulation, in particular for thermal or phonic insulation.

14. Device for the continuous production of a mineral foam according to the method of claims 1 to 11, comprising a duct (4) which comprises a first section of duct (9) adapted to transport the foaming slurry, with a length L1 and a diameter D1, starting from a point of addition (5) of the gas-forming liquid, and finishing by connecting with a second section of duct (10), which is the exit point of the device,
wherein L1 is comprised between 2 and 20 m, D1 is comprised between 5 and 25 mm, the ratio D1/L1 is comprised between 100 and 1500.

15. The device according to claim 14 wherein there is no static mixer after the point of addition (5).

16. The device according to claims 14 or 15, further comprising a device for multiple injections arranged at the point of addition (5) between the first duct (4) and the second duct (8) and adapted to the addition of the gas-forming liquid.

## Patentansprüche

1. Verfahren zum ununterbrochenen Herstellen eines mineralischen Schaums niedriger Dichte, umfassend die folgenden Schritte:
(i) Zubereitung einer Zementschlämme, umfassend:
- Zement;
- ultrafeine Partikel, aus denen die D50 von 10 bis 600 nm besteht;
- ein betonverflüssigendes Mittel;
- ein Mangansalz; und
- Wasser;
(ii) Hinzufügen einer gasbildenden Flüssigkeit zu der Zementschlämme, die nach Schritt (i) erhalten wurde, umfassend:
- ein gasbildendes Mittel; und
- ein viskositätsmodifizierendes Mittel, das ein Polymer ist, das aus einem anionischen bio-basierten Polymer, einem amphiphilen biobasierten Polymer, einem alkali-quellbaren Akrylpolymer und einer Mischung davon ausgewählt ist;
um eine schäumende Schlämme zu erhalten;
(iii) Anwenden der schäumenden Schlämme, die in Schritt (ii) erhalten wurde, auf einen Träger;
(iv) Belassen der schäumenden Schlämme zum Ausdehnen auf dem Träger.

2. Verfahren gemäß Anspruch 1, wobei der mineralische Schaum im trockenen Zustand eine Dichte von 50 bis 180 kg/m³, bevorzugt von 60 bis 170 kg /m³, weiter bevorzugt von 70 bis 150 kg/m³ aufweist.

3. Verfahren gemäß irgendeinem der voranstehenden Ansprüche, wobei der Zement der Mischung aus Schritt (i) ein CEM I ist, der bevorzugt einen spezifischen Oberflächenbereich nach Blaine oberhalb von 5000 cm²/g aufweist.

4. Verfahren gemäß irgendeinem der voranstehenden Ansprüche, wobei das gasbildende Mittel, das in der gasbildenden Flüssigkeit enthalten ist, die in Schritt (ii) hinzugefügt wird, in einer Konzentration von weniger als 15 Gew.-%, bevorzugt weniger als 8 Gew.-% der gasbildenden Flüssigkeit vorliegt.

5. Verfahren gemäß irgendeinem der voranstehenden Ansprüche, wobei das gasbildende Mittel, das in der gasbildenden Flüssigkeit enthalten ist, die in Schritt (ii) hinzugefügt wird, eine Lösung aus Wasserstoffperoxid, eine Lösung aus Peroxomonoschwefelsäure, eine Lösung aus Peroxidschwefelsäure, eine Lösung aus alkalinen Peroxiden, eine Lösung aus Alkalinerdeperoxiden, eine Lösung aus organischen Peroxiden, eine Suspension aus Partikeln aus Aluminium und Mischungen davon ist, bevorzugt ist sie eine Lösung aus Wasserstoffperoxid.

6. Verfahren gemäß irgendeinem der voranstehenden Ansprüche, wobei das viskositätsmodifizierende Mittel, das in der gasbildenden Flüssigkeit enthalten ist, die in Schritt (ii) hinzugefügt wird, ein amphiphiles biobasiertes Polymer ist, das bevorzugt aus Methylzellulose, Methylhydroxyethylzellulose und Hydroxyproplymethylzellulose ausgewählt wird.

7. Verfahren gemäß irgendeinem der voranstehenden Ansprüche, wobei die Zementschlämme aus Schritt (i) weiterhin einen mineralischen Zuschlag umfasst, dessen Partikel eine zwischen 0,1 µm bis 4 mm inbegriffene D50 aufweisen.

8. Verfahren gemäß irgendeinem der voranstehenden Ansprüche, wobei die Zementschlämme des Schritts (i) weiterhin Fasern umfasst.

9. Verfahren gemäß irgendeinem der voranstehenden Ansprüche, wobei die Zementschlämme des Schritts (i) durch erstes Vermischen einer Vormischung aus Zement, ultrafeinen Partikeln und optional einem mineralischen Zuschlag und dann Hinzufügen des betonverflüssigenden Mittels, Mangansalz und Wasser erhalten wird.

10. Verfahren gemäß irgendeinem der voranstehenden Ansprüche, wobei die gasbildende Flüssigkeit in Schritt (ii) der Zementschlämme durch wenigstens zwei Zuschlagspunkte hinzugefügt wird, der Zuschlag ist bevorzugt eine Injektion.

11. Verfahren gemäß irgendeinem der voranstehenden Ansprüche, wobei der Träger, der in Schritt (iii) verwendet wird, eine Wand ist.

12. Träger, der mittels des Verfahrens gemäß Anspruch 1 bis 11 mit wenigstens einer Schicht aus mineralischem Schaum beschichtet wird, wobei die Dicke der genannten einen Schicht wenigstens 5 cm beträgt.

13. Verwendung des Trägers, der gemäß Anspruch 12 zur Isolation beschichtet wird, insbesondere zur Wärme- oder Schalldämmung.

14. Vorrichtung zum ununterbrochenen Herstellen eines mineralischen Schaums gemäß dem Verfahren der Ansprüche 1 bis 11, umfassend eine Leitung (4), die einen ersten Leitungsabschnitt (9) umfasst, der zum Transportieren der Zementschlämme geeignet ist, mit einer Länge L1 und einem Durchmesser D1, die von einem Zuschlagspunkt (5) der gasbildenden Flüssigkeit beginnt und per Anschließen an einen zweiten Leitungsabschnitt (10) endet, der der Ausgangspunkt der Vorrichtung ist,
wobei L1 zwischen 2 und 20 m inbegriffen ist, D1 zwischen 5 und 25 mm inbegriffen ist, das Verhältnis D1/L1 zwischen 100 und 1500 inbegriffen ist.

15. Vorrichtung gemäß Anspruch 14, wobei nach dem Zuschlagspunkt (5) kein statischer Mischer vorhanden ist.

16. Vorrichtung gemäß Anspruch 14 oder 15, weiterhin umfassend eine Vorrichtung für mehrfache Injektionen, die an dem Zuschlagspunkt (5) zwischen der ersten Leitung (4) und der zweiten Leitung (8) angeordnet und für den Zuschlag der gasbildenden Flüssigkeit geeignet sind.

## Revendications

1. Procédé pour la production continue d'une mousse minérale de faible densité comprenant les étapes suivantes :
(i) la préparation d'un coulis de ciment comprenant :
- du ciment ;
- des particules ultrafines dont le D50 est compris dans la plage de 10 à 600 nm ;
- un agent réducteur d'eau ;
- un sel de manganèse ; et
- de l'eau ;
(ii) l'ajout au coulis de ciment obtenu après l'étape (i) d'un liquide de formation de gaz comprenant :
- un agent de formation de gaz ; et
- un agent de modification de viscosité qui est un polymère choisi parmi un polymère anionique d'origine biologique, un polymère amphiphile d'origine biologique, un polymère acrylique alcalin gonflable et un mélange de ceux-ci ;
pour obtenir un coulis moussant ;
(iii) l'application du coulis moussant obtenu à l'étape (ii) sur un support ;
(iv) le fait de laisser le coulis moussant s'étendre sur le support.

2. Procédé selon la revendication 1 dans lequel la mousse minérale présente une densité à l'état sec de 50 à 180 kg/m³, préférentiellement de 60 à 170 kg/m³, plus préférentiellement de 70 à 150 kg/m³.

3. Procédé selon l'une quelconque des revendications précédentes dans lequel le ciment du mélange de l'étape (i) est un CEM I, ayant préférentiellement une surface spécifique de Blaine au-dessus de 5000 cm²/g.

4. Procédé selon l'une quelconque des revendications précédentes dans lequel l'agent de formation de gaz compris dans le liquide de formation de gaz ajouté à l'étape (ii) est en une concentration de moins de 15 % en poids du poids du liquide de formation de gaz, de préférence de moins de 8 % en poids.

5. Procédé selon l'une quelconque des revendications précédentes dans lequel l'agent de formation de gaz compris dans le liquide de formation de gaz à l'étape (ii) est une solution de peroxyde d'hydrogène, une solution d'acide peroxomonosulphurique, une solution d'acide peroxodisulfphurique, une solution de peroxydes alcalins, une solution de peroxydes alcalino-terreux, une solution de peroxyde organique, une suspension de particules d'aluminium ou de mélanges de ceux-ci, de préférence c'est une solution de peroxyde d'hydrogène.

6. Procédé selon l'une quelconque des revendications précédentes dans lequel l'agent de modification de viscosité compris dans le liquide de formation de gaz ajouté à l'étape (ii) est un polymère amphiphile d'origine biologique, de préférence choisi parmi la cellulose de méthyle, la cellulose de méthylhydroxyéthyle et la cellulose d'hydroxypropylméthyle.

7. Procédé selon l'une quelconque des revendications précédentes dans lequel le coulis de ciment de l'étape (i) comprend en outre une addition minérale dont les particules présentent un D50 compris dans la plage de 0,1 µm à 4 mm.

8. Procédé selon l'une quelconque des revendications précédentes dans lequel le coulis de ciment de l'étape (i) comprend en outre des fibres.

9. Procédé selon l'une quelconque des revendications précédentes dans lequel le coulis de ciment de l'étape (i) est obtenu en mélangeant d'abord un pré-mélange de ciment, de particules ultrafines et éventuellement d'addition minérale, puis en ajoutant l'agent réducteur d'eau, le sel de manganèse et l'eau.

10. Procédé selon l'une quelconque des revendications précédentes dans lequel le liquide de formation de gaz de l'étape (ii) est ajouté au coulis de ciment par le biais d'au moins deux points d'ajout, de préférence l'ajout est une injection.

11. Procédé selon l'une quelconque des revendications précédentes dans lequel le support utilisé à l'étape (iii) est un mur.

12. Support recouvert par le procédé des revendications 1 à 11, avec au moins une couche de mousse minérale, dans lequel l'épaisseur de ladite une couche est d'au moins 5 cm.

13. Utilisation du support recouvert selon la revendication 12 pour isolation, en particulier pour isolation thermique ou phonique.

14. Dispositif pour la production continue d'une mousse minérale selon le procédé des revendications 1 à 11, comprenant un conduit (4) qui comprend une première section de conduit (9) adaptée pour transporter le coulis moussant, d'une longueur L1 et d'un diamètre D1, commençant à un point d'ajout (5) du liquide de formation de gaz, et finissant par le raccordement à une seconde section de conduit (10), qui est le point de sortie du dispositif, dans lequel L1 est comprise entre 2 et 20 m, D1 est compris entre 5 et 25 mm, le rapport D1/L1 est compris entre 100 et 1500.

15. Dispositif selon la revendication 14 dans lequel il n'y a pas de mélangeur statique après le point d'ajout (5).

16. Dispositif selon les revendications 14 ou 15, comprenant en outre un dispositif pour de multiples injections agencé au niveau du point d'ajout (5) entre le premier conduit (4) et le second conduit (8) et adapté à l'ajout du liquide de formation de gaz.
